# EUROPÄISCHE PATENTANMELDUNG

(11) **EP 2 623 953 A1**
(43) Veröffentlichungstag der Anmeldung: **07.08.2013**
(21) Anmeldenummer: 12000715.8
(22) Anmeldetag: 03.02.2012
(51) Int. Cl.: G01N 3/56

(54) **Prüfbehälter**

(71) Anmelder: THELKIN AG, 8409 Winterthur (CH)
(72) Erfinder: Schwenke, Thorsten, Dr., 8409 Winterthur (CH)
(74) Vertreter: Schaad, Balass, Menzl & Partner AG

(57) **Zusammenfassung**

Die vorliegende Erfindung betrifft einen Prüfbehälter, insbesondere zur biomechanischen Material- und Bauteilprüfung, aufweisend zumindest ein Bodenteil (12) zum Aufbringen auf eine Basis einer Prüfapparatur sowie eine Wandung (15), wobei die Wandung (15) und das Bodenteil (12) eine Kammer (18) zur Aufnahme einer Prüfflüssigkeit definieren, und wobei das Bodenteil (12) eine von der Kammer (18) abgewandte Unterseite (13) sowie eine den Boden der Kammer (18) bildende Oberseite (14) aufweist und wobei das Bodenteil (12) und die Wandung (15) zusammen einstückig ausgebildet sind.

## Beschreibung

Die vorliegende Erfindung betrifft einen Prüfbehälter gemäss dem Oberbegriff von Anspruch 1, welcher insbesondere zur biomechanischen Material- und Bauteilprüfung in einem entsprechenden Prüfsystem gemäss dem Oberbegriff von Anspruch 15 eingesetzt wird.

In der Material- und Bauteilprüfung ist es vielfach erforderlich, dass die zu prüfenden Komponenten in einem Bad oder einem Behälter (bzw. einer Kammer) in Flüssigkeit getestet werden, um ihre entsprechenden Umgebungsbedingungen realitätsnah abbilden zu können. So werden beispielsweise Materialien und Produkte der Medizintechnik in Ringerlösung oder einer auf Blutserum basierenden Prüfflüssigkeit bei einer Temperatur von 37 °C untersucht, um den menschlichen Körper als späteres Einsatzgebiet zu imitieren. In einer Prüfapparatur werden dabei vermittels eines Prüfkraftapplikators die zu prüfenden Komponenten in dem Behälter (bzw. der Kammer) mit einem auf den jeweiligen Anwendungsfall zugeschnittenen Lastprofil beaufschlagt.

Die gegenwärtig zur Probenaufnahme eingesetzten Behälter werden aus mehreren Teilen zusammengesetzt. Zum einen können Sie aus transparenten Kunststoffbeuteln bestehen, die gegenüber einem Boden einer Probenhalterung dichtend geklemmt werden. Zum anderen ist es bekannt, dass die Wände der Kammern aus einem ebenfalls durchsichtigen aber festen Kunststoff gefertigt werden und wiederum vermittels einer Dichtung gegenüber dem Kammerboden befestigt werden. Der Kammerboden wird typischerweise aus einem korrosionsbeständigen Metall gefertigt. Der Kammerboden kann dabei, insbesondere bei der Verschleissprüfung, gleichzeitig als Testkomponente fungieren. Diese Ausgestaltung des Kammerbodens galt gerade im Hinblick auf die regelmässig millionenfach zu durchlaufenden Testzyklen als besonders günstig bei der Kraftübertragung sowie durch eine Demontage als gut zu reinigen.

Obwohl sich derartige Kammerkonzepte in der Praxis etabliert haben, weisen sie einige Nachteile auf. So existiert zwischen der Wand und dem Boden stets ein Spalt, in welchem sich Partikel und Bestandteile der Flüssigkeit absetzen können. Eine rückstandsfreie Reinigung bzw. eine Sterilisation ist somit im zusammengebauten Zustand kaum möglich, weshalb die Kammer hierfür regelmässig demontiert werden muss. Ein wiederholtes Auseinander- und Zusammenbauen der Kammer kann allerdings zu Beschädigungen der Dichtungskomponenten führen. Darüber hinaus können Dichtungskomponenten altern, insbesondere durch vermehrte Sterilisationszyklen.

Insgesamt besteht daher ein vergleichsweise hohes Risiko, dass es während des Einsatzes einer derartigen Kammer zu einer Undichtigkeit kommt. Dies kann unter anderem auch zu einer signifikanten Verfälschung der Testergebnisse führen.

Es ist somit die Aufgabe der vorliegenden Erfindung, einen Prüfbehälter bereitzustellen, mit dem die vorstehend genannten Nachteile überwunden werden können.

Diese Aufgabe wird gemäss Anspruch 1 gelöst durch einen Prüfbehälter, insbesondere zur biomechanischen Material-und Bauteilprüfung, aufweisend zumindest ein Bodenteil zum Aufbringen auf eine Basis einer Prüfapparatur sowie eine Wandung, wobei die Wandung und das Bodenteil eine Kammer zur Aufnahme einer Prüfflüssigkeit definieren, und wobei das Bodenteil eine von der Kammer abgewandte Unterseite sowie eine den Boden der Kammer bildende Oberseite aufweist, und wobei das Bodenteil und die Wandung zusammen einstückig ausgebildet sind.

Eine übliche Prüfapparatur, in die ein erfindungsgemässer Prüfbehälter eingebracht wird, umfasst regelmässig eine Basis (bzw. einen Tisch), einen Rahmen mit Halterungen zur Aufnahme von Probekörpern (oberhalb des Tischs) sowie einen Prüfkraftapplikator zum Erzeugen von Lastprofilen.

In einer bevorzugten Ausführungsform der Erfindung weist der Boden der Kammer zumindest eine Vertiefung zur formschlüssigen (bzw. form- und kraftschlüssigen) Aufnahme von zumindest einem gegengleichen ersten Probekörper auf.

Dabei korrespondiert vorzugsweise der Innendurchmesser der Vertiefung mit dem Aussendurchmesser des ersten Probekörpers. Auf diese Weise kann der erste Probekörper so im Bodenbereich der Kammer gehalten werden, dass er während eines Prüfvorgangs bzw. Prüfzyklus jedenfalls keine Translationsbewegung ausführen kann.

Die Vertiefung ist regelmässig konzentrisch zur Mittelachse des Prüfbehälters angeordnet. Es sind allerdings auch Anwendungsfälle mit einer exzentrisch angeordneten Vertiefung denkbar.

In einer weiteren bevorzugten Ausführungsform der Erfindung ist innerhalb der Vertiefung zumindest eine erste Öffnung zur teilweisen Aufnahme von zumindest einem Stiftelement angeordnet, wobei die erste Öffnung vorzugsweise exzentrisch zur Mittelachse des Prüfbehälters angeordnet ist. Auf diese Weise wird die Voraussetzung für eine Verdrehsicherung geschaffen, so dass der (korrespondierend ausgestaltete) erste Probekörper während eines Prüfvorgangs bzw. Prüfzyklus auch keine Rotationsbewegung ausführen kann.

Der erste Probekörper weist weiter vorzugsweise zumindest eine zweite Öffnung zur teilweisen Aufnahme des zumindest einen Stiftelements auf. Es sind allerdings auch Ausführungsformen denkbar, in denen eine, zwei, drei oder noch mehrere zusätzliche Öffnungen in der Vertiefung und dem ersten Probekörper vorgesehen sind. Dies hängt jeweils von der konkreten Anwendung sowie dem gewünschten Bewegungs- bzw. Lastprofil ab.

Jedenfalls kann durch die Kopplung der beiden oder mehreren Öffnungen in der Vertiefung bzw. dem ersten Probekörper mittels des Stiftelements wirksam verhindert werden, dass der erste Probekörper während eines Prüfvorgangs eine Rotationsbewegung ausführt.

Die erste und die zweite Öffnung weisen bevorzugt im Wesentlichen denselben Durchmesser auf wie das Stiftelement, so dass das Stiftelement eine formschlüssige (bzw. form- und kraftschlüssige) Kopplung des Probekörpers mit dem Bodenteil bewirkt.

Hierdurch kann auf besonders effiziente Weise sichergestellt werden, dass eine spielfreie Kopplung hergestellt wird so dass der erste Probekörper während eines Prüfvorgangs keine wackelnden Bewegungen ausführt.

Die Tiefe der ersten und der zweiten Öffnung entspricht bevorzugt jeweils ungefähr der halben Länge des Stiftelements. Der erste Probekörper sollte in jedem Fall plan auf dem Boden der Vertiefung aufliegen, so dass das Stiftelement nicht zu lang sein darf. Ein zu kurzes Stiftelement, welches z.B. nur knapp aus der ersten Öffnung herausragt, birgt die Gefahr, dass der Probekörper während eines Prüfvorgangs über das Stiftelement rutscht und eine ungewollte Drehbewegung ausführt.

In einer anderen bevorzugten Ausführungsform der Erfindung weist der Boden der Kammer zumindest eine Erhebung zur formschlüssigen (bzw. form- und kraftschlüssigen) Aufnahme von zumindest einem gegengleichen ersten Probekörper auf. Der Probekörper weist dann bevorzugt an seiner Unterseite eine mit der Erhebung korrespondierende Aussparung auf.

Analog zu dem vorbeschriebenen Ausführungsbeispiel einer Verdrehsicherung ist bei diesem Ausführungsbeispiel innerhalb der Erhebung zumindest eine erste Öffnung zur teilweisen Aufnahme von zumindest einem Stiftelement angeordnet, wobei die erste Öffnung vorzugsweise exzentrisch zur Mittelachse des Prüfbehälters angeordnet ist.

Entsprechend weist der erste Probekörper zumindest eine zweite Öffnung zur teilweisen Aufnahme des zumindest einen Stiftelements auf. Es sind analog auch jeweils mehrere Öffnungen in der Erhebung bzw. dem ersten Probekörper denkbar. Auf analoge Weise korrespondieren wiederum Durchmesser und Tiefe der ersten und zweiten Öffnung mit dem Stiftelement. Auch hier wird das Stiftelement bevorzugt ausserhalb der Mittelachse des Prüfbehälters angeordnet.

In einer weiteren bevorzugten Ausführungsform der Erfindung ist im Bereich der Unterseite des Bodenteils zumindest eine weitere Öffnung zur teilweisen Aufnahme von zumindest einem Stiftelement angeordnet, um eine formschlüssige (bzw. form- und kraftschlüssige) Kopplung des Bodenteils zu ermöglichen. Diese zumindest eine Öffnung dient insbesondere zur spielfreien Aufnahme von einem oder mehreren auf der Basis oder dem Tisch einer Prüfapparatur angeordneten Stiftelement(en), mit dem/denen über den Boden des Prüfbehälters ein gewünschtes Bewegungs- bzw. Lastprofil auf den Probekörper aufgebracht werden kann.

Besonders bevorzugt sind im Bereich der Unterseite des Bodenteils eine dritte Öffnung und eine vierte Öffnung angeordnet, wobei die dritte Öffnung konzentrisch zur Mittelachse des Prüfbehälters angeordnet ist und die vierte Öffnung exzentrisch zur Mittelachse des Prüfbehälters. Auf diese Weise wird verhindert, dass der Prüfbehälter selbst eine ungewollte Translations- und/oder Rotationsbewegung relativ zu dem Tisch bzw. der Basis der Prüfapparatur ausführt.

Durchmesser und Tiefe der dritten und vierten Öffnung korrespondieren dabei, wie oben beschrieben, mit den Stiftelementen auf der Basis bzw. dem Tisch der Prüfapparatur.

Weiter vorzugsweise weist die dritte Öffnung einen grösseren Durchmesser auf als die vierte Öffnung. Auf diese Weise kann eine bessere Halterung für den Prüfbehälter erzielt und die Handhabung bei der Installation vereinfacht werden. Die Positionen zum Einkoppeln bzw. Einsetzen des Prüfbehälters sind damit genau vorgegeben. Vorteilhaft ist der Durchmesser der dritten Öffnung doppelt so gross wie der Durchmesser der vierten Öffnung.

In einer anderen bevorzugten Ausführungsform der Erfindung ist der Abstand von der Mittelachse des Prüfbehälters zur Mittelachse der vierten Öffnung etwas kleiner als der Radius der Vertiefung bzw. der Erhebung. Gleiches gilt vorzugsweise auch für den Abstand von der Mittelachse X des Prüfbehälters zur Mittelachse der ersten bzw. zweiten Öffnung. Es hat sich herausgestellt, dass durch eine derartige Anordnung eine besonders gute Übertragung der Bewegungs- bzw. Lastprofile auf die Probekörper erfolgen kann.

In einer wiederum anderen bevorzugten Ausführungsform der Erfindung ist die erste Öffnung um einen Winkel α von etwa 45° - 135°, vorzugweise um etwa 90° gegenüber der vierten Öffnung versetzt angeordnet. Auf diese Weise kann die Übertragung der Lastprofile auf die Probekörper noch weiter optimiert werden.

Die Öffnungen im Prüfbehälter und im ersten Probekörper sind vorzugsweise als Sacklöcher ausgebildet. Die Sacklöcher weisen dabei insbesondere eine kreiszylindrische Form auf.

In einer noch weiteren Ausführungsform der vorliegenden Erfindung sind die Wandung und das Bodenteil aus einem Kunststoffmaterial gebildet. Vorzugsweise kommen dabei Polymethylmethacrylat (Plexiglas) oder Polycarbonat zum Einsatz. Hierdurch wird insbesondere ein sehr korrosionsbeständiger Prüfbehälter bereitgestellt. Der Prüfbehälter kann aber auch aus anderen Werkstoffen gefertigt werden, z.B. komplett aus Edelstahl, einem anderen Kunststoff oder aus Glas.

Weiter bevorzugt weist bei einer erfindungsgemässen Kombination von einem Prüfbehälter mit einem Probekörper der erste Probekörper zumindest eine zweite Öffnung zur teilweisen Aufnahme des zumindest einen Stiftelements auf. Zudem weisen vorzugsweise die erste Öffnung und die zweite Öffnung einen Durchmesser auf, welcher dem Durchmesser des Stiftelements entspricht.

In weiterer Ausgestaltung der Erfindung weist ein Prüfsystem zumindest eine Basis, einen Rahmen, einen Prüfkraftapplikator sowie einen vorbeschriebenen Prüfbehälter auf, wobei der Prüfbehälter von der Basis (bzw. einem Tisch) aufgenommen wird und wobei an dem Rahmen zumindest eine Halterung für einen zweiten Probekörper angeordnet ist mittels derer der zweite Probekörper in Kontakt mit einem ersten Probekörper in der Kammer des Prüfbehälters bringbar ist und wobei mit Hilfe des Prüfkraftapplikators über die Basis und/oder die Halterung vordefinierte Lastprofile auf den ersten und/oder den zweiten Probekörper aufgebracht werden.

Bei einem derartigen Prüfsystem werden vermittels des Prüfkraftapplikators Kräfte in X-, Y- und Z-Richtung erzeugt. Darüber hinaus können auch Drehmomente um die X-, Y- und Z-Achsen erzeugt werden. Typische Anwendungsfälle eines solchen Prüfsystems umfassen etwa die Simulation von Hüftbewegungen sowie Kräften für Hüftprothesen, künstliche Kniegelenke oder Wirbelsäulenimplantate.

Im Folgenden wird die Erfindung anhand der beigefügten Zeichnungen näher erläutert. Es zeigt:
- Fig. 1: eine perspektivische Darstellung eines erfindungsgemässen Prüfbehälters im leeren Zustand;
- Fig. 2: eine phantomartige Draufsicht auf den erfindungsgemässen Prüfbehälter nach Fig. 1;
- Fig. 3: eine phantomartige Seitenansicht des erfindungsgemässen Prüfbehälters nach Fig. 1;
- Fig. 4: eine phantomartige Unteransicht des erfindungsgemässen Prüfbehälters nach Fig. 1;
- Fig. 5: eine perspektivische Ansicht eines erfindungsgemässen Prüfbehälters, in den ein erster Probekörper eingebracht ist sowie ein an einer Halterung angeordneter zweiter Probekörper;
- Fig. 6: eine phantomartige Draufsicht auf den erfindungsgemässen Prüfbehälter gemäss Fig. 5;
- Fig. 7: eine Querschnittsansicht des erfindungsgemässen Prüfbehälters entlang der Linie VI - VI gemäss Fig. 6;
- Fig. 8: eine phantomartige Seitenansicht des erfindungsgemässen Prüfbehälters gemäss Fig. 5;
- Fig. 9: eine phantomartige Unteransicht des erfindungsgemässen Prüfbehälters gemäss Fig. 5.

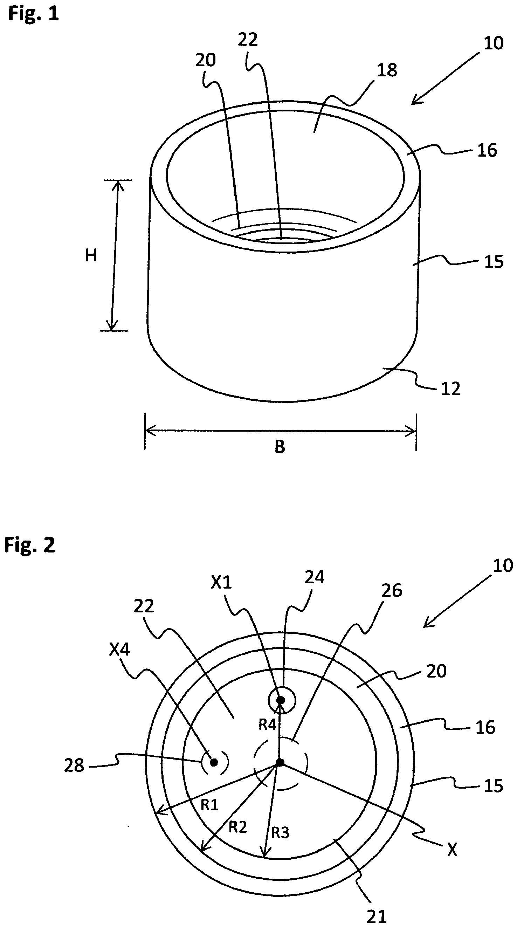

In Fig. 1 wird der erfindungsgemässe Prüfbehälter 10 perspektivisch im leeren Zustand dargestellt. Man erkennt das Bodenteil 12 und die Wandung 15, welche zusammen einstückig ausgebildet sind. Die Wandung 15 weist einen Rand 16 auf und umschliesst die Kammer 18 des Prüfbehälters 10, welche insbesondere eine Prüfflüssigkeit dichtend aufnehmen soll. Im Bodenbereich der Kammer 18 ist angrenzend an die Innenseite der Wandung 15 ein umlaufender Ring 20 ausgebildet. Der Übergang von der Wandung 15 in den umlaufenden Ring 20 ist dabei abgerundet. Der umlaufende Ring 20 definiert bzw. umgibt eine Vertiefung 22 zur Aufnahme eines ersten Probekörpers. Der Prüfbehälter 10 weist eine Höhe H sowie eine Breite B auf. Das bevorzugte Verhältnis H:B liegt bei 3 bis 4 : 5, es kann allerdings je nach Anwendungsfall variieren.

Fig. 2 gibt eine (transparente) Draufsicht auf den leeren Prüfbehälter gemäss Fig. 1 wieder. Man erkennt den Rand 16 der Wandung 15 des Prüfbehälters 10 sowie den an die Innenseite der Wandung 15 angrenzenden umlaufenden Ring 20. In die Vertiefung 22 ist ein erstes Sackloch 24 eingebracht. Des Weiteren sind in die Unterseite des Bodenteils 12 ein drittes Sackloch 26 und ein viertes Sackloch 28 eingebracht, welche daher gestrichelt dargestellt wurden. Der Durchmesser des dritten Sacklochs 26 ist in diesem Ausführungsbeispiel in etwa doppelt so gross wie der Durchmesser des ersten Sacklochs 24 und des vierten Sacklochs 28. Das erste Sackloch 24 und das vierte Sackloch 28 sind im Bereich der Vertiefung 22 in einem Abstand von ungefähr dem 0.5- bis 1-fachen ihres Durchmessers von dem umlaufenden Ring 20 angeordnet. Der Radius R1 gibt den Abstand von der Mittelachse X des Prüfbehälters 10 zur Aussenseite der Wandung 15 an. Der Radius R2 gibt den Abstand von der Mittelachse X des Prüfbehälters zur Innenseite der Wandung 15 an. Der Radius R3 gibt den Abstand von der Mittelachse X des Prüfbehälters 10 zur Innenseite der Vertiefung 22 (d.h. zur Kante 21 des umlaufenden Rings 20) an. Der Radius R4 gibt schliesslich den Abstand von der Mittelachse X des Prüfbehälters 10 zur Mittelachse X1 des ersten Sacklochs 24 (welcher i.d.R. dem zur Mittelachse X4 des vierten Sacklochs 28 entspricht) an. Im Folgenden werden einige beispielhafte Grössenverhältnisse für den erfindungsgemässen Prüfbehälter 10 angegeben:
(R2-R3) = 1.1 bis 1.5 * (R1-R2) vorzugsweise 1.2 bis 1.4 (R1-R2)
R3 = 3 bis 6 * (R2-R3) vorzugsweise 4 bis 5 * (R2-R3)
R3 = 1.25 bis 2 * R4 vorzugsweise 1.5 bis 1.75 * R4
(R3-R4) = 0.5 bis 2 * D4 (bzw. D1) vorzugsweise 1 bis 1.5 * D4 (bzw. D1)
D3 = 1.5 bis 3 * D4 (bzw. D1) vorzugsweise 2 bis 2.5 * D4 (bzw. D1)
R4 = 1.25 bis 2 * D3 vorzugweise 1.5 bis 1.75 * D3

Die obigen Grössenverhältnisse können allerdings von Anwendungsfall zu Anwendungsfall variieren.

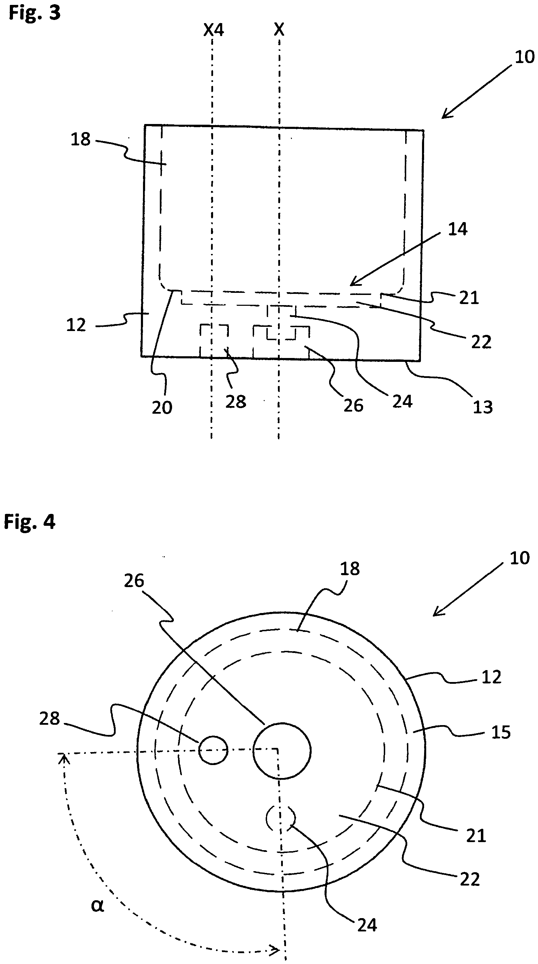

Das erste Sackloch 24 und das vierte Sackloch 28 sind regelmässig um einen Winkel α von 45° - 135°, vorzugweise von etwa 90° (vgl. Fig. 4) gegeneinander versetzt.

Fig. 3 zeigt den erfindungsgemässen Prüfbehälter 10 in einer (transparenten) Seitenansicht. Die Innenseite der Kammer 18, der umlaufende Ring 20 mit der Kante 21, die Vertiefung 22, das erste Sackloch 24 in der Vertiefung 22 sowie das dritte und vierte Sackloch 26, 28 an der Unterseite des Bodenteils 12 sind insofern gestrichelt dargestellt. Man erkennt zudem die Mittelachse X des Prüfbehälters 10 sowie die Mittelachse X4, welche durch das vierte Sackloch 28 hindurch verläuft. Die Sacklöcher 24, 26 und 28 weisen in etwa dieselbe Tiefe auf, wobei das dritte Sackloch 26 einen in etwa doppelt so grossen Durchmesser aufweist wie das erste bzw. vierte Sackloch 24, 28. Die Vertiefung 22 und der umlaufende Ring 20 bilden die Oberseite des Bodenteils 12.

Fig. 4 veranschaulicht eine (transparente) Unteransicht eines erfindungsgemässen Prüfbehälters 10. Dabei erkennt man eingebracht in die Unterseite 13 des Bodenteils 12 das dritte und das vierte Sackloch 26, 28. Die Innenwand der Vertiefung 22 (bzw. die Kante 21 des umlaufenden Rings 20), die Innenseite der Kammer 18 bzw. Wandung 15 sowie das erste Sackloch 24 sind entsprechend gestrichelt dargestellt. Das dritte und das vierte Sackloch 26, 28 werden üblicher Weise auf korrespondierende Stifte eines Prüfapparaturtisches (nicht gezeigt) aufgesetzt, um eine formschlüssige Verbindung für eine optimale Lastprofilübertragung auf den Prüfbehälter 10 bereitzustellen.

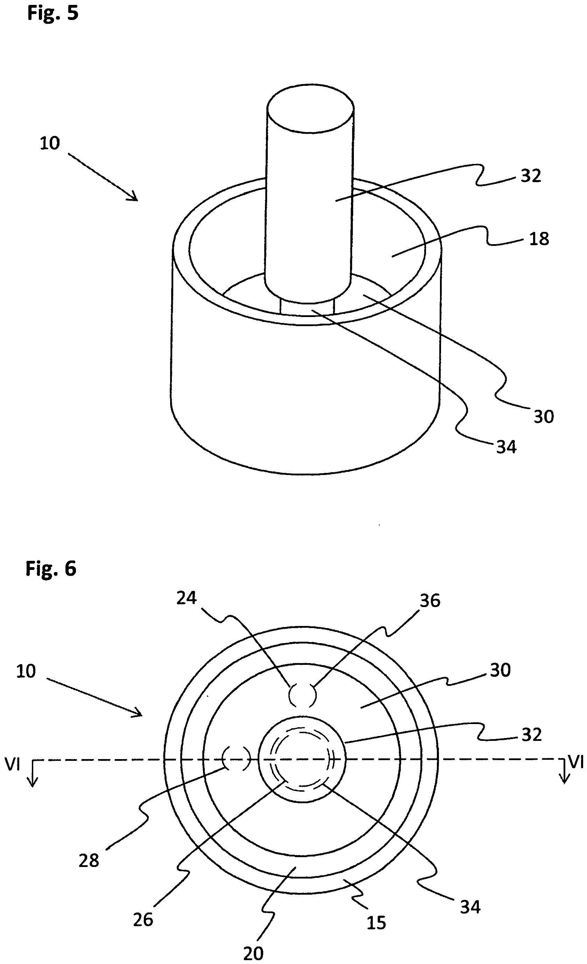

Fig. 5 repräsentiert eine perspektivische Ansicht eines erfindungsgemässen Prüfbehälters 10, in den ein erster Probekörper 30 eingebracht ist sowie ein an einer Halterung 32 angeordneter zweiter Probekörper 34. Der erste und der zweite Probekörper 30, 34 sind vollständig in der Kammer 18 des Prüfbehälters 10 aufgenommen. Üblicher Weise werden sie für die Prüfung von einer körperflüssigkeitsähnlichen Prüfflüssigkeit umgeben, welche hier aus Gründen der Anschaulichkeit nicht dargestellt ist. Die Prüfflüssigkeit kann allerdings auch aus einer Körperflüssigkeit bestehen.

Fig. 6 ist eine (transparente) Draufsicht auf den Prüfbehälter 10 gemäss Fig. 5 mit eingebrachtem ersten und zweiten Probekörper 30, 34. Wie zu sehen, weist in diesem Ausführungsbeispiel die Halterung 32 einen grösseren Durchmesser auf als der zweite Probekörper 34 (gestrichelt dargestellt), welcher seinerseits einen grösseren Durchmesser aufweist als das dritte Sackloch 26 (gestrichelt dargestellt). Ebenfalls gestrichelt dargestellt sind das erste Sackloch 24 und das vierte Sackloch 28, welche um etwa 90° zueinander versetzt angeordnet sind (vgl. Fig. 4). Im Übrigen ist deckungsgleich mit dem ersten Sackloch 24 (in der Vertiefung 22) ein zweites Sackloch 36 im ersten Probekörper 30 angeordnet. Der erste Probekörper 30 wird umgeben von dem umlaufenden Ring 20, welcher seinerseits von der Wandung 15 des Prüfbehälters 10 umgeben wird.

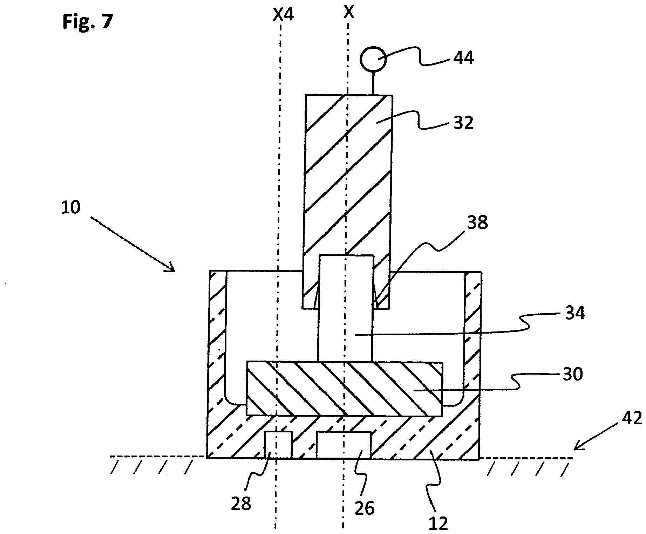

Die Fig. 7 zeigt eine Querschnittsansicht entlang der Linie VI-VI in Fig.6. Man erkennt zunächst die Halterung 32 welche eine Aufnahme 38 für den zweiten Probekörper 34 aufweist. Der zweite Probekörper 34 wird vorzugsweise reib- und/oder formschlüssig in der Aufnahme 38 der Halterung 32 aufgenommen. Er kann, als Sonderform des Reibschlusses, z.B. auch klemmend befestigt werden. Des Weiteren sieht man, dass der zweite Probekörper 34 in Kontakt mit dem ersten Probekörper 30 steht. Auf diese Weise kann innerhalb eines mit einer Prüfflüssigkeit gefüllten Prüfbehälters 10 etwa ein Lastprofil für einen Oberschenkelknochenkopf (zweiter Probekörper) in einer Hüftgelenkpfanne (erster Probekörper) erzeugt werden. Im Bodenteil 12 des Prüfbehälters 10 erkennt man zudem das dritte und vierte Sackloch 26, 28, wobei die Mittelachse X4 durch das vierte Sackloch 28 verläuft und die Mittelachse X des Prüfbehälters 10 durch das zentral angeordnete dritte Sackloch 26. Es werden auch der Tisch 42 (hier aus Gründen der Anschaulichkeit ohne Stiftelemente) und der Rahmen 44 einer üblichen Prüfapparatur angedeutet, auf welche der Prüfbehälter 10 aufgebracht ist. Die im Zusammenhang mit der vorliegenden Erfindung verwendeten Stiftelemente sind in der Regel zylindrisch ausgebildet, es können allerdings auch Gewindestifte (z.B. für das dritte Sackloch 26) zum Einsatz kommen.

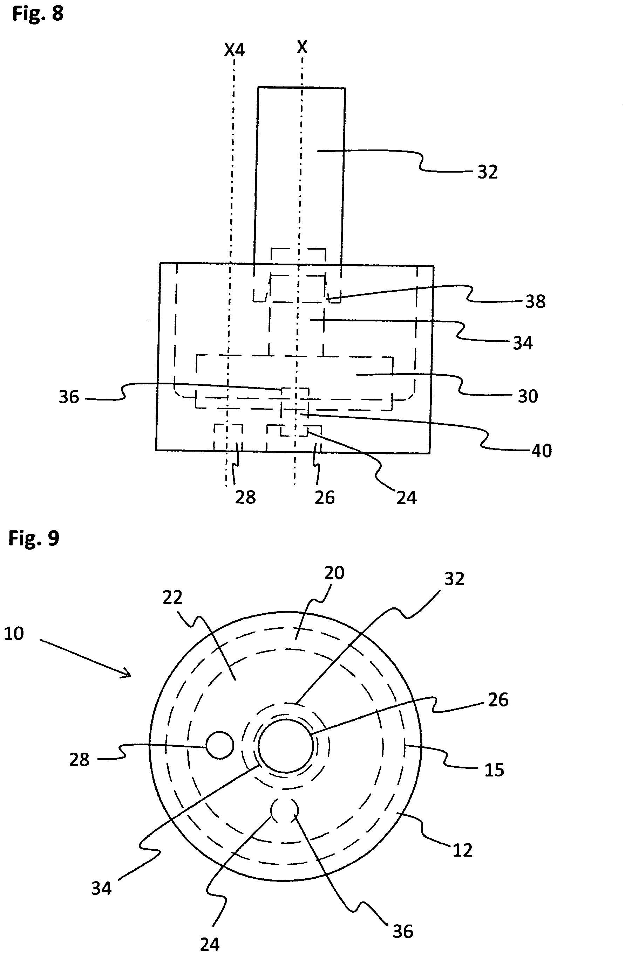

Fig. 8 ist eine (transparente) Seitenansicht eines Prüfbehälters gemäss Fig. 5. Neben der Halterung 32, der Aufnahme 38 und dem zweiten Probekörper 34 erkennt man insbesondere einen Stift 40, welcher im ersten Sackloch 24 (in der Vertiefung 22) und im zweiten Sackloch 36 (im ersten Probekörpers 30) steckt und so eine formschlüssige Kopplung des ersten Probekörpers 30 mit dem Bodenteil 12 des Prüfbehälters 10 bewirkt. An der Unterseite 13 des Bodenteils 12 sind wiederum das dritte und vierte Sackloch 26, 28 zu erkennen. Das dritte Sackloch 26 liegt dabei, in Betrachtungsrichtung, vor dem ersten Sackloch 24 und dem zweiten Sackloch 36.

Fig. 9 zeigt eine (transparente) Unteransicht, welche insbesondere noch einmal die Anordnung des dritten und vierten Sacklochs 26, 28 im Bereich der Unterseite 13 des Bodenteils 12 des Prüfbehälters 10 veranschaulicht. Der zweite Probekörper 34, die Halterung 32, das erste bzw. zweite Sackloch 24, 36, die Vertiefung 22, die Wandung 15 des Prüfbehälters 10 sowie der umlaufende Ring 20 sind entsprechend gestrichelt dargestellt.

## Patentansprüche

1. Prüfbehälter, insbesondere zur biomechanischen Material- und Bauteilprüfung, aufweisend zumindest ein Bodenteil (12) zum Aufbringen auf eine Basis einer Prüfapparatur sowie eine Wandung (15), wobei die Wandung (15) und das Bodenteil (12) eine Kammer (18) zur Aufnahme einer Prüfflüssigkeit definieren, und wobei das Bodenteil (12) eine von der Kammer (18) abgewandte Unterseite (13) sowie eine den Boden der Kammer (18) bildende Oberseite (14) aufweist, **dadurch gekennzeichnet, dass** das Bodenteil (12) und die Wandung (15) zusammen einstückig ausgebildet sind.

2. Prüfbehälter gemäss Anspruch 1, **dadurch gekennzeichnet, dass** der Boden der Kammer (18) zumindest eine Vertiefung (22) zur formschlüssigen Aufnahme von zumindest einem gegengleichen ersten Probekörper (30) aufweist.

3. Prüfbehälter gemäss Anspruch 2, **dadurch gekennzeichnet, dass** innerhalb der Vertiefung (22) zumindest eine erste Öffnung (24) zur teilweisen Aufnahme von zumindest einem Stiftelement (40) angeordnet ist, wobei die erste Öffnung (24) vorzugsweise exzentrisch zur Mittelachse X des Prüfbehälters (10) angeordnet ist.

4. Prüfbehälter gemäss Anspruch 1, **dadurch gekennzeichnet, dass** der Boden der Kammer (18) zumindest eine Erhebung zur formschlüssigen Aufnahme von zumindest einem gegengleichen ersten Probekörper aufweist.

5. Prüfbehälter gemäss Anspruch 4, **dadurch gekennzeichnet, dass** innerhalb der Erhebung zumindest eine erste Öffnung zur teilweisen Aufnahme von zumindest einem Stiftelement (40) angeordnet ist, wobei die erste Öffnung (24) vorzugsweise exzentrisch zur Mittelachse X des Prüfbehälters (10) angeordnet ist.

6. Prüfbehälter gemäss einem der Ansprüche 1 bis 5, **dadurch gekennzeichnet, dass** im Bereich der Unterseite (13) des Bodenteils (12) zumindest eine weitere Öffnung zur teilweisen Aufnahme von zumindest einem Stiftelement angeordnet ist, um eine formschlüssige Kopplung des Bodenteils (12) zu ermöglichen.

7. Prüfbehälter gemäss Anspruch 6, **dadurch gekennzeichnet, dass** im Bereich der Unterseite (13) des Bodenteils (12) eine dritte Öffnung (26) und eine vierte Öffnung (28) angeordnet sind, wobei die dritte Öffnung (26) konzentrisch zur Mittelachse X des Prüfbehälters (10) angeordnet ist und die vierte Öffnung (28) exzentrisch zur Mittelachse X des Prüfbehälters (10).

8. Prüfbehälter gemäss Anspruch 7, **dadurch gekennzeichnet, dass** die dritte Öffnung (26) einen grösseren Durchmesser aufweist als die vierte Öffnung (28).

9. Prüfbehälter gemäss Anspruch 7 oder 8, **dadurch gekennzeichnet, dass** der Abstand von der Mittelachse X des Prüfbehälters (10) zur Mittelachse X4 der vierten Öffnung etwas kleiner als der Radius der Vertiefung (22) bzw. der Erhebung ist.

10. Prüfbehälter gemäss einem der Ansprüche 7 bis 9, **dadurch gekennzeichnet, dass** die erste Öffnung (24) um einen Winkel α von etwa 45° - 135°, vorzugweise etwa 90° gegenüber der vierten Öffnung (28) versetzt angeordnet ist.

11. Prüfbehälter gemäss einem der vorhergehenden Ansprüche, **dadurch gekennzeichnet, dass** die Wandung (15) und das Bodenteil (12) aus einem Kunststoffmaterial gebildet sind.

12. Prüfbehälter gemäss Anspruch 11, **dadurch gekennzeichnet, dass** das Kunststoffmaterial Polymethylmethacrylat oder Polycarbonat aufweist.

13. Prüfbehälter mit einem Probekörper gemäss Anspruch 2 oder 4, **dadurch gekennzeichnet, dass** der erste Probekörper (30) zumindest eine zweite Öffnung (36) zur teilweisen Aufnahme des zumindest einen Stiftelements (40) aufweist.

14. Prüfbehälter mit einem Probekörper gemäss Anspruch 13, **dadurch gekennzeichnet, dass** die erste Öffnung (24) und die zweite Öffnung (36) einen Durchmesser aufweisen, welcher dem Durchmesser des Stiftelements (40) entspricht.

15. Prüfsystem mit zumindest einer Basis, einem Rahmen, einem Prüfkraftapplikator sowie einem Prüfbehälter gemäss einem der Ansprüche 1 bis 14, wobei der Prüfbehälter (10) von der Basis aufgenommen wird und wobei an dem Rahmen zumindest eine Halterung (32) für einen zweiten Probekörper (34) angeordnet ist mittels derer der zweite Probekörper in Kontakt mit einem ersten Probekörper (30) in der Kammer (18) des Prüfbehälters (10) bringbar ist und wobei mit Hilfe des Prüfkraftapplikators über die Basis und/oder die Halterung (32) vordefinierte Lastprofile auf den ersten und/oder den zweiten Probekörper (30, 34) aufgebracht werden.
